# EUROPEAN PATENT SPECIFICATION

(11) **EP 1 683 250 B1**
(45) Date of publication and mention of the grant of the patent: **20.02.2008**
(21) Application number: 04781751.5
(22) Date of filing: 19.08.2004
(51) Int. Cl.: H02K 7/08

(54) **ELECTRIC MOTOR WITH SELF-ADJUSTING BUSHING STRUCTURE**
ELEKTROMOTOR MIT SELBSTJUSTIERENDER MUFFENSTRUKTUR
MOTEUR ELECTRIQUE AVEC STRUCTURE DE TRAVERSEE AUTO REGLABLE

(30) Priority: 14.11.2003 US 520015 P; 16.03.2004 US 801306
(43) Date of publication of application: 26.07.2006
(73) Proprietor: Siemens VDO Automotive Corporation, Auburn Hills, MI 48326-2980 (US)
(72) Inventor: OH, JonYeon, Suwanee, GA 30024 (US); REE, Roland, Alpharetta, GA 30005 (US); ANDERSON, Barry, Suwanee, GA 30024 (US)
(74) Representative: Morgan, Marc
(86) International application number: PCT/US2004/027131
(87) International publication number: WO 2005/057758

(56) References cited:
- EP-A- 0 998 013
- EP-A- 1 122 863
- DE-A- 4 128 110
- DE-A- 19 513 970
- DE-A- 19 537 503
- GB-A- 2 016 213
- US-A- 5 213 000
- US-A- 5 811 903
- PATENT ABSTRACTS OF JAPAN vol. 1998, no. 08, 30 June 1998 (1998-06-30) & JP 10 066296 A (WATANABE SEISAKUSHO:KK), 6 March 1998 (1998-03-06)

## Description

### FIELD OF THE INVENTION

This invention relates to controlling endplay and alignment of a shaft of an electric motor.

### BACKGROUND OF THE INVENTION

In conventional motors, one of a number of endplates is selected to take-up a gap between an end of a shaft and a gear housing. The endplay plates vary in thickness by 0.1 mm. Visual inspection is done to optimize the gap and the correct thickness endplay plate is picked up via automation to meet the constant endplay plate gap of between 0.02-0.20 mm. Disadvantages of this configuration include the requirement of providing numerous parts (endplay plates) with different thickness. In addition, a constant process check is needed to select the optimum endplay plate 10 based on the gap between the end of the shaft 12 and endplay plate 10. Furthermore, with these configurations, a separate cylindrical bushing is needed to locate the shaft. Thus, conventional motors of the type defined in DE 19537503, EP 1122863, US 5213000, EP 0998013 require numerous parts with regard to controlling shaft location and endplay.

Thus, there is a need to reduce the number of parts for controlling shaft location and endplay.

### SUMMMARY OF THE INVENTION

An object of the present invention is to fulfill the need referred to above. In accordance with the principles of the present invention, this objective is obtained by providing a bushing structure constructed and arranged to be operatively associated with a shaft of an electric motor as claimed in claim 1.

In accordance with another aspect of the invention is provided an electrial motor, as claimed in claim 7.

Other objects, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.

### BRIEF DESCRIPTION OF THE DRAWINGS

The invention will be better understood from the following detailed description of the preferred embodiments thereof, taken in conjunction with the accompanying drawings, wherein like reference numerals refer to like parts, in which:
FIG. 1 shows a top view of a self-adjusting cylindrical bushing structure provided in accordance with the principles of the invention.
FIG. 2 is a cross sectional view taken along the line 2-2 of FIG. 1.
FIG. 3 is an enlarged view of the portion encircled in FIG. 1.
FIG. 4 is a sectional view of an electric motor incorporating the self-adjusting cylindrical bushing structure of FIG. 1.
FIG. 5 is an enlarged view of the portion encircled in FIG. 4.

### DETAILED DESCRIPTION OF THE EXEMPLARY EMBODIMENT

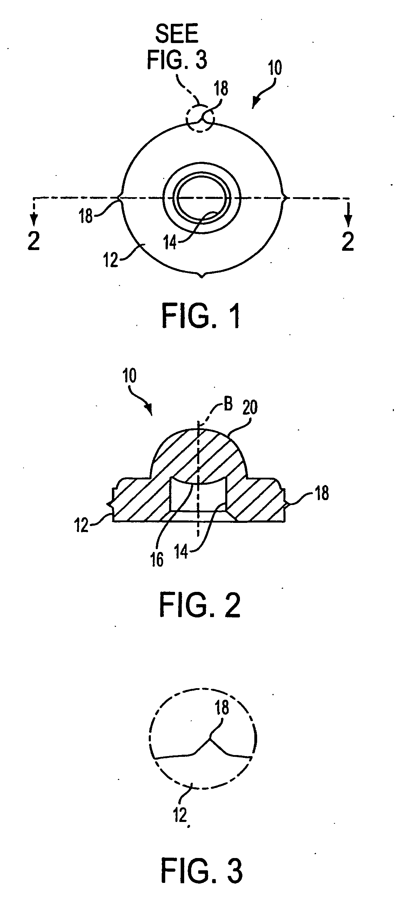

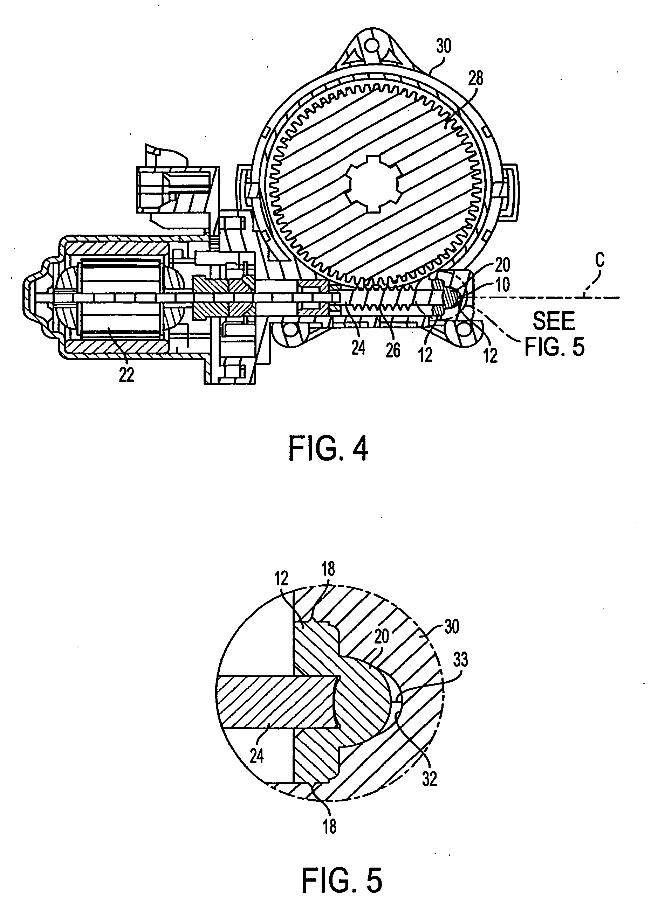

With reference to FIGs. 1-3, a self-adjusting cylindrical bushing structure is shown, generally indicated at 10, in accordance with the invention. The bushing structure 10 includes a generally cylindrical bushing member 12 having a central axis B. The bushing member 12 includes a recess 14 therein extending along the axis B and constructed and arranged to receive an end of a rotatable shaft 24 of a motor 22 (FIG. 4). The motor 22 is preferably a bi-directional windowlift motor for a vehicle. A bottom of the recess includes a curved portion 16 that engages the shaft end. The bushing member 12 also includes a plurality of protrusions 18 extending outwardly from a periphery thereof, the function of which will be explained below. An endplay member 20 in the form of a generally half-sphere, is integral with and extends from the bushing member 12.

The bushing structure 10 is shown in FIG. 4 incorporated into an electric motor 22 with a shaft 24 having a worm 26 associated with a gear 28. The illustrated embodiment shows a bi-directional window-lift motor for a vehicle, but the bushing structure 10 can be used in any motor assembly having an armature and winding assembly. The gearhousing 30 of the motor 22 includes a generally elliptical recess 32 therein that extends along an axis C of the shaft 24. The recess 32 receives at least a part of the endplay member 20 of the bushing structure 10 in preferably an interference-fit arrangement. The protrusions 18 of the bushing member 12 fit into a portion of the gearhousing 30 to help maintain the bushing structure 10 in place with respect to the gearhousing 30. Upstanding ribs 33 (FIG. 5) can be provided to extend from the bottom of the recess 32. The ribs can define an X-shape. When the endplay member 20 is forced into the recess 32, the ribs 33 deform to define a dead stop for movement of the endplay member 20.

The end of the shaft 24 is received in the recess 14 of the bushing member 12 such that the bushing member 12 locates the shaft and prevents lock up of the motor. The assembly force from the shaft 24 will force the endplay member 20 into the proper location for automatic adjustment of the end gap between the shaft 24 and gearhousing 30. Thus, the single component of the bushing structure 10 functions to locate the shaft 24 and controls endplay of the shaft instead of the many components needed for these functions in the conventional bushing-endplate configuration as described above. Thus, the invention provides cost-savings, reduction of parts, and ease of assembly.

The foregoing preferred embodiments have been shown and described for the purposes of illustrating the structural and functional principles of the present invention, as well as illustrating the methods of employing the preferred embodiments and are subject to change without departing from such principles.

## Claims

1. A bushing structure (10) constructed and arranged to be operatively associated with a shaft (24) of an electric motor (22), the motor (22) having a housing including a generally elliptical recess (32) therein defined along an axis of the shaft (24), the bushing structure comprising:
a generally cylindrical bushing member (14) constructed and arranged to supportingly engage an end of the shaft (24) so as to locate the shaft (24) with respect to the housing and to prevent lockup of the motor (22), and
an endplay member (20) associated with the end of the shaft, the endplay member including a spherical portion constructed and arranged to be received axially between the end of the shaft and the housing in the elliptical recess (32) of said housing so as to control endplay of the shaft **characterized in that** the endplay member (20) is integral with the cylindrical bushing member and the spherical portion is a generally half-sphere axially extending from said bushing member.

2. The structure of claim 1, wherein the bushing member (14) has a central axis and includes a recess (32) therein extending along the central axis, the recess being constructed and arranged to receive the end of the shaft.

3. The structure of claim 2, wherein the recess includes a curved portion that is constructed and arranged to engage the end of the shaft (24).

4. The structure of claim 1, wherein the bushing member also includes a plurality of protrusions (33) extending outwardly from a periphery thereof, the protrusions (33) being constructed and arranged to engage the housing of the motor.

5. The structure of claim 1, wherein upstanding ribs (33) extend from a bottom of the elliptical recess (32) so as to define a deformable stop.

6. The structure of claim 2, wherein the recess (32) includes a curved portion that is constructed and arranged to engage the end of the shaft (24).

7. A electric motor (22) comprising:
a housing,
a shaft (24) mounted for rotation with respect to the housing,
the housing including a generally elliptical recess (32) therein, the recess being disposed generally adjacent to an end of the shaft (24),
a generally cylindrical bushing member (14) supportingly engaged with an end of the shaft (24) so as to locate the shaft with respect to the housing and to prevent lockup of the motor, and
an endplay member (20) associated with the end of the shaft (24), the endplay member including a spherical portion received axially between the end of the shaft and the housing in the elliptical recess of said housing so as to control endplay of the shaft (24), **characterized in that** the endplay member (20) is integral with the cylindrical bushing member (14) and the spherical portion is a generally half-sphere axially extending from said bushing member (14).

8. The motor of claim 7, wherein the bushing member (14) has a central axis and includes a recess therein extending along the central axis, the recess receiving the end of the shaft.

9. The motor of claim 7, wherein the bushing member (14) also includes a plurality of protrusions extending outwardly from a periphery thereof, the protrusions engaging the housing of the motor.

## Patentansprüche

1. Muffenanordnung (10), die derart gestaltet und angeordnet ist, dass sie mit einer Welle (24) eines Elektromotors (22) zusammenwirkt, wobei der Motor (22) ein Gehäuse mit einer im Allgemeinen elliptischen Vertiefung (32) umfasst, die entlang einer Achse der Welle (24) definiert ist, wobei die Muffenanordnung Folgendes umfasst:
ein im Allgemeinen zylindrisches Muffenelement (12), das derart gestaltet und angeordnet ist, dass es stützend mit einem Ende der Welle (24) in Eingriff gelangt, um die Welle (24) in Bezug auf das Gehäuse zu positionieren und eine Blockierung des Motors (22) zu verhindern, und
ein Axialspiel-Element (20), das mit dem Ende der Welle verbunden ist, wobei das Axialspiel-Element einen kugelförmigen Abschnitt enthält, der derart gestaltet und angeordnet ist, dass er axial zwischen dem Ende der Welle und dem Gehäuse in der elliptischen Vertiefung (32) des besagten Gehäuses aufgenommen wird, um das Axialspiel der Welle zu regeln, **dadurch gekennzeichnet, dass** das Axialspiel-Element (20) Bestandteil des zylindrischen Muffenelements ist und der kugelförmige Abschnitt im Allgemeinen eine Halbkugel ist, die sich axial von dem besagten Muffenelement aus erstreckt.

2. Anordnung gemäß Anspruch 1, wobei das Muffenelement (12) eine Mittelachse aufweist und eine Vertiefung (14) enthält, die sich entlang der Mittelachse erstreckt, wobei die Vertiefung derart gestaltet und angeordnet ist, dass sie das Ende der Welle (24) aufnimmt.

3. Anordnung gemäß Anspruch 2, wobei die Vertiefung einen gekrümmten Abschnitt umfasst, der derart gestaltet und angeordnet ist, dass er mit dem Ende der Welle (24) in Eingriff gelangt.

4. Anordnung gemäß Anspruch 1, wobei das Muffenelement ferner eine Vielzahl von Vorsprüngen (18) umfasst, die sich von dessen Umfang aus nach außen erstrecken, wobei die Vorsprünge (18) derart gestaltet und angeordnet sind, dass sie mit dem Gehäuse des Motors in Eingriff gelangen.

5. Anordnung gemäß Anspruch 1, wobei aufrecht stehende Rippen (33) sich von einem unteren Ende der elliptischen Vertiefung (32) aus erstrecken, um einen verformbaren Anschlag zu definieren.

6. Anordnung gemäß Anspruch 2, wobei die Vertiefung (14) einen gekrümmten Abschnitt umfasst, der derart gestaltet und angeordnet ist, dass er in Eingriff mit dem Ende der Welle (24) gelangt.

7. Elektromotor (22), der Folgendes umfasst:
ein Gehäuse,
eine Welle (24), die zur Rotation in Bezug auf das Gehäuse angebracht ist,
wobei das Gehäuse eine im Allgemeinen elliptische Vertiefung (32) umfasst, wobei die Vertiefung im Allgemeinen angrenzend an ein Ende der Welle (24) angeordnet ist,
ein im Allgemeinen zylindrisches Muffenelement (12), das stützend mit einem Ende der Welle (24) in Eingriff gelangt, um die Welle in Bezug auf das Gehäuse zu positionieren und eine Blockierung des Motors zu verhindern, und
ein Axialspiel-Element (20), das mit dem Ende der Welle (24) verbunden ist, wobei das Axialspiel-Element einen kugelförmigen Abschnitt enthält, der axial zwischen dem Ende der Welle und dem Gehäuse in der elliptischen Vertiefung des besagten Gehäuses aufgenommen wird, um das Axialspiel der Welle (24) zu regeln, **dadurch gekennzeichnet, dass** das Axialspiel-Element (20) Bestandteil des zylindrischen Muffenelements (12) ist und der kugelförmige Teil im Allgemeinen eine Halbkugel ist, die sich axial von dem besagten Muffenelement (12) aus erstreckt.

8. Motor gemäß Anspruch 7, wobei das Muffenelement (12) eine Mittelachse aufweist und eine Vertiefung enthält, die sich entlang der Mittelachse erstreckt, wobei die Vertiefung das Ende der Welle aufnimmt.

9. Motor gemäß Anspruch 7, wobei das Muffenelement (12) ferner eine Vielzahl von Vorsprüngen umfasst, die sich von dessen Umfang aus nach außen erstrecken, wobei die Vorsprünge mit dem Gehäuse des Motors in Eingriff gelangen.

10. Motor gemäß Anspruch 7, wobei der Motor (22) ein Zweiwege-Fensterheber für ein Kraftfahrzeug ist.

## Revendications

1. Structure de traversée (10) construite et agencée pour être fonctionnellement associée à un arbre (24) d'un moteur électrique (22), le moteur (22) ayant un carter comprenant en son sein une cavité globalement elliptique (32) définie le long d'un axe de l'arbre (24), la structure de traversée comprenant :
un élément de traversée globalement cylindrique (12) construit et agencé pour venir en prise par appui avec une extrémité de l'arbre (24) de façon à positionner l'arbre (24) par rapport au carter et pour empêcher un blocage du moteur (22), et
un élément de jeu axial (20) associé à l'extrémité de l'arbre, l'élément de jeu axial comprenant une partie sphérique construite et agencée pour être reçue axialement entre l'extrémité de l'arbre et le carter dans la cavité elliptique (32) dudit carter de façon à contrôler le jeu axial de l'arbre, **caractérisé en ce que** l'élément de jeu axial (20) fait partie intégrante de l'élément de traversée cylindrique et la partie sphérique est globalement une demi-sphère s'étendant axialement depuis ledit élément de traversée.

2. Structure selon la revendication 1, dans laquelle l'élément de traversée (12) a un axe central et comprend en son sein une cavité (14) s'étendant le long de l'axe central, la cavité étant construite et agencée pour recevoir l'extrémité de l'arbre.

3. Structure selon la revendication 2, dans laquelle l'élément de traversée comprend une partie incurvée qui est construite et agencée pour venir en prise avec l'extrémité de l'arbre (24).

4. Structure selon la revendication 1, dans laquelle l'élément de traversée comprend également une pluralité de saillies (18) s'étendant vers l'extérieur depuis une périphérie de celui-ci, les saillies (18) étant construites et agencées pour venir en prise avec le carter du moteur.

5. Structure selon la revendication 1, dans laquelle des nervures verticales (33) s'étendent depuis un fond de la cavité elliptique (32) de façon à définir une butée déformable.

6. Structure selon la revendication 2, dans laquelle la cavité (14) comprend une partie incurvée qui est construite et agencée pour venir en prise avec l'extrémité de l'arbre (24).

7. Moteur électrique (22) comprenant :
un carter,
un arbre (24) monté d'une manière permettant la rotation par rapport au carter,
le carter comprenant en son sein une cavité globalement elliptique (32), la cavité étant disposée de façon globalement adjacente à une extrémité de l'arbre (24),
un élément de traversée globalement cylindrique (12) venant en prise par appui avec une extrémité de l'arbre (24) de façon à positionner l'arbre par rapport au carter et pour empêcher un blocage du moteur, et
un élément de jeu axial (20) associé à l'extrémité de l'arbre (24), l'élément de jeu axial comprenant une partie sphérique reçue axialement entre l'extrémité de l'arbre et le carter dans la cavité elliptique dudit carter de façon à contrôler le jeu axial de l'arbre (24), **caractérisé en ce que** l'élément de jeu axial (20) fait partie intégrante de l'élément de traversée cylindrique (12) et la partie sphérique est globalement une demi-sphère s'étendant axialement depuis ledit élément de traversée (12).

8. Moteur selon la revendication 7, dans lequel l'élément de traversée (12) a un axe central et comprend en son sein une cavité s'étendant le long de l'axe central, la cavité recevant l'extrémité de l'arbre.

9. Moteur selon la revendication 7, dans lequel l'élément de traversée (12) comprend également une pluralité de saillies s'étendant vers l'extérieur depuis une périphérie de celui-ci, les saillies venant en prise avec le carter du moteur.

10. Moteur selon la revendication 7, dans lequel le moteur (22) est un moteur de lève-vitre bidirectionnel pour un véhicule.
